# EUROPÄISCHE PATENTSCHRIFT

(11) **EP 1 106 064 B1**
(45) Veröffentlichungstag und Bekanntmachung des Hinweises auf die Patenterteilung: **11.12.2002**
(21) Anmeldenummer: 00109538.9
(22) Anmeldetag: 04.05.2000
(51) Int. Cl.: A01L 5/00

(54) **Hufeisenartiger, plattenförmiger Hufbeschlag aus Kunststoff**
Sheetlike plastic horseshoe
Fer à cheval en matière plastique en forme de plaque

(30) Priorität: 02.12.1999 DE 29921225 U; 17.03.2000 DE 20004928 U
(43) Veröffentlichungstag der Anmeldung: 13.06.2001
(73) Patentinhaber: CERA Handelsgesellschaft mbH, 87600 Kaufbeuren (DE)
(72) Erfinder: Rafeld, Karl, 87499 Wildpoldsried (DE)
(74) Vertreter: Kern, Wolfgang, Dipl.-Ing.

(56) Entgegenhaltungen:
- DE-C- 533 729
- GB-A- 358 446
- GB-A- 1 163 379
- US-A- 3 494 422
- US-A- 5 002 132

## Beschreibung

Die Erfindung betrifft einen hufeisenartigen, plattenförmigen Hufbeschlag aus Kunststoff dessen beide Schenkel zur Anpassung an die Größe des Hufes mit einer Einrichtung zur Veränderung ihres gegenseitigen Abstandes in Form eines Verbindungssteges versehen sind, der mit den Schenkeln des Beschlags im Bereich ihrer Enden in Eingriff bringbar ist, wobei der Beschlag eine mit Profilkörpem versehene Lauffläche aufweist.

Aus der europäischen Patentanmeldung EP 893 057 ist ein Hufbeschlag bekannt. Dieser aus Kunststoff bestehende Hufbeschlag ist offen und weist somit zwei Schenkel auf, die im Strahlbereich des Hufes mit Abstand voneinander getrennt sind. Eine im Bereich der weißen Linie des Hufes befindliche Lochreihe des Hufbeschlags dient zur Befestigung des Beschlags am Huf. Dieser bekannte Hufbeschlag kennzeichnet sich insbesondere durch die Möglichkeit der Anpassung an unterschiedliche Hufgrößen durch Spreizung der Schenkel des Beschlags im Bereich ihrer Enden in gewissem Umfang, wodurch eine Beschlaggröße für mehrere Hufgrößen geeignet ist, da die jeweils gewünschte Hufbeschlaggröße mittels zwischen den Schenkelenden benutzbarer stegförmiger Verbindungsmittel so gespreizt bzw. kontrahiert werden kann, daß die im Beschlag befindliche Lochreihe über der jeweiligen weißen Linie des Hufes zu liegen kommt. Die bekannten Verbindungsmittel sehen verschiedenartige Ausbildungen vor, so beispielsweise eine Lasche, deren loses Ende stufenlos einstellbar und durch Verschrauben, Verkleben oder Verschweißen an dem gegenüberliegenden anderen Schenkelende befestigbar ist. Darüber hinaus werden auch zueinander verschiebbare Stegteile vorgeschlagen, die den Abstand zwischen den Schenkelenden des Hufbeschlags mit Hilfe einer Schraubverbindung überbrücken.

In jedem Fall sind die stegförmigen Verbindungsmittel bei der bekannten Konstruktion so geartet, dass sie die die Strahlöffnung begrenzenden Schenkelenden nur verbinden, jedoch nicht zu einem homogenen Verschluss dieser Enden führen, was bedeutet, dass die Verbindungsmittel in bezug auf die Längsachse des Hufbeschlags entweder asymmetrisch gestaltet sind und dabei auf einem der Schenkel aufliegen oder im Falle einer symmetrischen Ausbildung des Verbindungsstegs nur eine punktförmige Verbindung der Schenkelenden herstellen, wobei die Verbindung der Stege an den Schenkelenden mittels Verschraubung erfolgt, bei der in den Enden Gewindebohrungen vorgesehen werden, denen entsprechende Bohrungen in den Verbindungsstegen zugeordnet sind, in die entsprechende Schrauben eingeschraubt werden.

Die Druckschrift GB-A-358446 zeigt als stegförmiges Verbindungsmittel ein Pass-Stück, das mit den Schenkeln des Beschlages im Bereich ihrer Enden in Eingriff bringbar ist, die Umrissform der Schenkelenden ergänzt und selbst eine Umrissform aufweist, die in den Schenkelenden hinterschnittene Aussparungen ausfüllt und dabei in die äußere Oberfläche der Schenkelenden im wesentlichen vollständig integriert ist. Dieses Pass-Stück ist flächendeckend und greift mit seitlichen Flügeln in die hinterschnittenen Aussparungen ein. Diese Flügel sind mit einem sie verbindenden Mittelstück versehen, das eine der Hufoberfläche abgewandte Oberseite aufweist, die mit der Oberfläche der Schenkelenden bündig ist.

Es hat sich gezeigt, dass die Befestigung des Beschlags mit Hilfe bekannter Hufnägel, die eine genaue Justierung des Beschlags auf dem Huf dahingehend erfordert, dass die in den Huf einzuschlagenden Nägel die sogenannte weiße Linie des Hufes treffen, zeitaufwendig ist und nicht immer zielgenau ausgeführt werden kann, weil aufgrund der Elastizität des Kunststoffmaterials des Beschlags beim Einschlagen der Nägel mit einem Hammer die Nagelspitze oftmals dazu neigt, seitlich auszuweichen, so dass dann die weiße Linie nicht getroffen wird und dass der feste Sitz des Pass-Stücks in den Schenkelenden zu wünschen übrig lässt

Die Erfindung hat sich zur Aufgabe gemacht, die Verbindung der Schenkelenden zu verbessern und insbesondere so zu gestalten, dass über im wesentlichen die gesamten stirnseitigen Endflächen der Schenkelenden eine Kraftübertragung möglich wird und der diese Kraft übertragende, stegartige Verbindungskörper gleichzeitig die Aufgabe eines den gegenseitigen Abstand der Schenkelenden bestimmenden Einsatzes übernimmt und darüber hinaus eine Verbindung schafft, die einfacher ist und damit auch kostengünstiger und einen festen Sitz des Pass-Stücks sicherstellt.

In diesem Zusammenhang soll auch die mit Profilkörpem versehene Lauffläche des Hufbeschlags so ausgebildet werden, dass die Hufnägel beim Einschlagen sicherer und zielgenauer gerührt werden und insbesondere die Köpfe der Nägel nicht über die Profilkörper hinausragen. In diesem Zusammenhang soll eine bessere Justierungsmöglichkeit des Beschlags in Bezug auf die Plazierung der Hufnägel im Huf ermöglicht werden.

Diese Aufgabe wird durch die Merkmale des Anspruchs 1 gelöst.

Zu diesem Zweck wird erfindungsgemäß vorgeschlagen, dass die der Hufoberfläche zugewandte Unterseite des Pass-Stücks zur Bildung eines erhabenen Teils des Mittelstücks gestuft ist, der Art, dass die beiden Flügel des Pass-Stücks durch eine Öffnung im Hufbeschlag begrenzende Randkanten gegen das Mittelstück abgesetzt sind und auf den Öffnungsrand umgebende, abgesetzte Lagerflächen in den Schenkelenden aufliegen, so dass die Schenkelenden durch das Pass-Stück unter Spannung miteinander in Verbindung haltbar sind, das Pass-Stück jedoch zwecks Austausches aus den Schenkelenden ausbaubar ist und dass der Hufbeschlag eine mit Profilkörper versehene Lauffläche aufweist.

Durch ein derartiges Pass-Stück zwischen den Schenkelenden des Hufbeschlags wird insbesondere erreicht, dass die Schenkelenden festgelegt werden, sich also unter Belastung in geringerem Maße spreizen, als dies der Fall ist, wenn als Verbindungsmittel der beiden Schenkelenden nur ein mehr oder weniger schmaler gerader oder gebogener Steg verwendet wird, an dem die Schenkelenden festgemacht werden. Das erfindungsgemäße Pass-Stück, das gemäß einer vorteilhaften Ausgestaltung die Schenkelenden formschlüssig verbindet und symmetrisch zur Längsachse des Hufbeschlags und damit zu den Schenkeln ausgebildet ist, hat den Vorteil, dass es den auf die Schenkelenden bei Benutzung des Hufbeschlags einwirkenden Kräfte, die bestrebt sind, die Schenkelenden zu verformen, in der Weise entgegenwirkt, dass auf Grund der besonderen Umrissgestaltung des Pass-Stücks die von ihm ausgehenden Rückhaltekräfte in eine wesentlich größere Querschnittsfläche der Schenkelenden übertragbar sind und daher zu einer geringeren Materialbeanspruchung der Schenkelenden führen, so dass der Verbindungssteg unter Belastung nicht mehr brechen kann. Letzteres ist insbesondere auch deshalb von Bedeutung, weil der Verformungswiderstand des Kunststoffmaterials unter dem Einfluss von Druck und Temperatur geringer ist als der des herkömmlichen Hufeisenmaterials, nämlich von Metall.

Darüber hinaus erhält das Pass-Stück innerhalb der Schenkelenden eine Auflage, die ein Durchrutschen des Pass-Stücks verhindert.

In diesem Zusammenhang hat es sich besonders bewährt, das Pass-Stück aus zwei in die Oberfläche der Schenkelenden voll integrierbaren, flachen, seitlichen, kleeblattähnlichen Flügeln und einem diese verbindenden, erhabenen Mittelstück auszubilden, wobei zweckmäßigerweise die seitlichen Flügel und die der Flügelform entsprechenden Aussparungen in den Schenkelenden zur Längsachse des Hufbeschlags schräg verlaufende Umrisslinien aurweisen.

Diese Umrisslinien bestehen vorteilhafterweise aus drei im wesentlichen geraden Teilen und zwei S-förmig gebogenen Teilen, die die geraden Teile verbinden. Dadurch ergibt sich für das Pass-Stück annähernd die Konfiguration eines Kleeblatts.

Gemäß einer weiteren vorteilhaften Ausgestaltung befindet sich je ein gerades Teil am inneren Umriss und am äußeren Umriss jedes Schenkelendes, wobei diese beiden geraden Innen- und Außenteile entgegengesetzt zur Längsachse des Hufbeschlags geneigt ausgebildet sind. In diesem Zusammenhang lässt sich der zwischen dem geraden Innenteil und dem geraden Außenteil befindliche dritte gerade Teil des Umrisses, der mit letzteren über die beiden S-förmig gebogenen Teile verbunden ist, entsprechend dem geraden Außenteil zur Längsachse des Hufbeschlags schräg verlaufend ausbilden, wodurch das Pass-Stück in Verbindung mit den es umgebenden Randkanten der Schenkelenden einen konischen Sitz erhält, auf Grund dessen nicht nur das Aufweiten der Hufplatte im Strahlbereich des Hufes erleichtert wird, sondern auch verhindert wird, dass das Pass-Stück aus diesem Bereich herausrutscht.

Besonders hervorzuheben ist, dass die Hufbeschlagkonstruktion so ausgebildet sein kann, dass der äußere Umriss und der innere Umriss der Schenkelenden durch die obere Umrisslinie bzw. untere Umrisslinie des Pass-Stücks fortgesetzt werden, so dass das Pass-Stück auch als flächige Ergänzung der Schenkelenden in Erscheinung tritt, wobei dann, wenn die Schenkelenden in Richtung auf den Kopfteil des Hufbeschlags gebogen ausgebildet sind, die obere Umrisslinie konvex und die untere Umrisslinie des Pass-Stücks konkav gekrümmt sind und zur Längsachse des Hufbeschlags symmetrisch liegen.

Darüber hinaus hat es sich als vorteilhaft erwiesen, den Hufbeschlag beim Beschlagen in Bezug auf die weiße Linie des Hufes durch seitliches Verschieben des Beschlags auf der Hufoberfläche genauer justieren zu können und die Hufnägel mit ihrem Kopf mit Sicherheit in der Lauffläche versenken zu können. In diesem Zusammenhang wird zweckmäßigerweise dem Boden der Vertiefung eine Dicke gegeben, die geringer ist als die Beschlagdicke, weil der Nagel sich dann besser einschlagen lässt, da das von ihm zu verdrängende Kunststoffmaterial eine geringere Masse besitzt.

Um diesen obigen Vorteil noch zu bekräftigen, könnte, gemäß einer weiteren Ausgestaltung der Erfindung, der Boden der Vertiefung mit wenigstens einem Loch zur Aufnahme der Spitze bzw. des Schaftes des Hufnagels versehen werden.

Darüber hinaus ist es zweckmäßig, die Höhe des Randes der Vertiefung bzw. der lochförmigen Erhebung so zu bemessen, dass sie der Höhe des Hufnagelkopfes entspricht, während die Länge der lochförmigen Vertiefung ein ausreichendes Spiel für die Platzierung des Hufnagels bieten soll und deshalb wenigstens der doppelten Längenabmessung eines Hufnagels entsprechen sollte.

Die langlochförmigen Erhebungen sind zweckmäßigerweise im vorderen Bereich des Beschlags so anzuordnen, dass sie beim Beschlagen des Hufs auf der sogenannten weißen Linie liegen, in die die Hufnägel einzuschlagen sind.

Weitere vorteilhafte Ausgestaltungen der Erfindung ergeben sich aus den Ansprüchen.

Die Erfindung wird nachfolgend an Hand der in der Zeichnung dargestellten Ausführungsbeispiele näher erläutert. In der Zeichnung zeigen:
- Fig. 1: eine Draufsicht des Hufbeschlags mit eingebautem Pass-Stück,
- Fig. 2: eine Schnittansicht des Hufbeschlags von Fig. 1 längs der Linie A-A,
- Fig. 3: eine Draufsicht des Pass-Stücks,
- Fig. 4: eine Stirnansicht des Pass-Stücks,
- Fig. 5: eine vergrößerte Detaildraufsicht des linken Schenkelendes des Hufbeschlags von Fig. 1.
- Fig. 6: eine gegenüber Fig. 1 vergrößerte Draufsicht auf die Lauffläche des plattenförmigen Hufbeschlags gemäß einer weiteren Ausführungsform der Erfindung,
- Fig. 7: eine Schnittansicht längs der Linie E-E von Fig. 6,
- Fig. 8: eine Schnittansicht des als flächendeckendes Paßstück ausgebildeten Verbindungsstegs im Bereich der Schenkelenden des Beschlags längs der Linie D-D von Fig. 6 und
- Fig. 9: eine Schnittansicht eines der beiden Schenkel des Beschlags von Fig. 6 längs der Linie B-B.

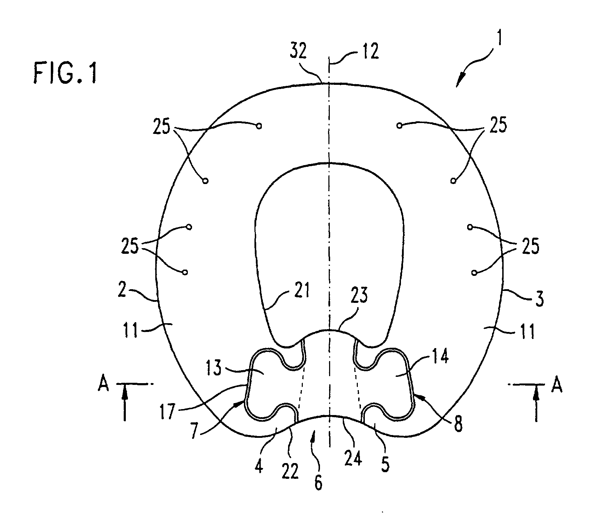

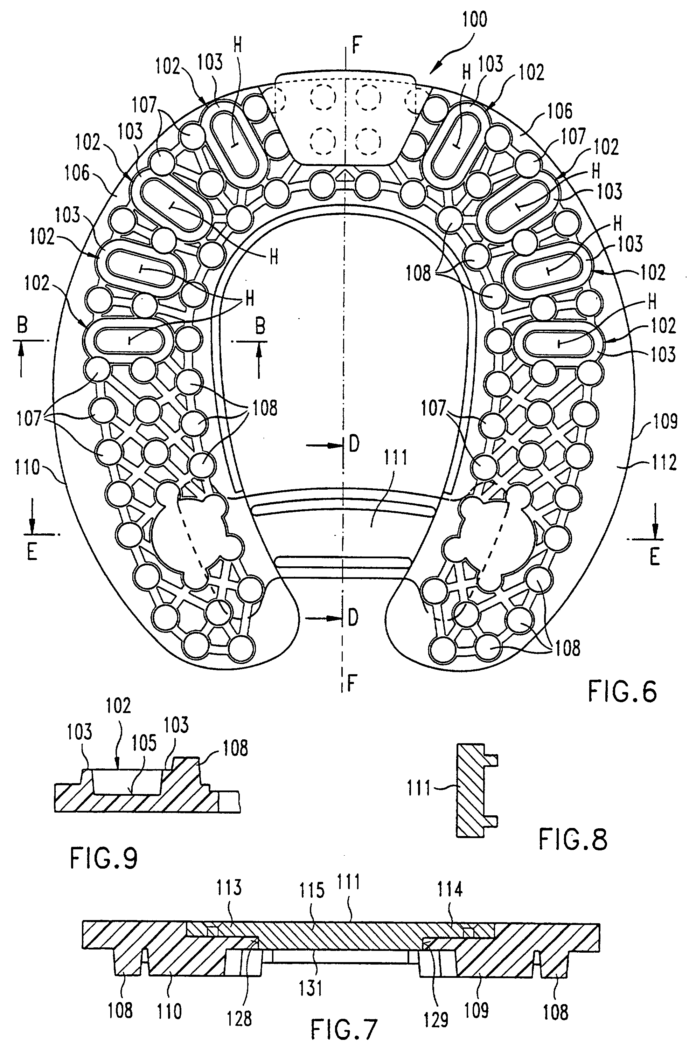

Der in Fig. 1 gezeigte plattenförmige Hufbeschlag 1 aus Kunststoff weist grundsätzlich die bekannte hufeisenförmige Konfiguration auf und ist in seiner Oberfläche 11 mit Löchern 25 versehen, die zur Befestigung des Beschlags mit Hilfe von Nägeln, Schrauben u.dgl. im Bereich der sogenannten weißen Linie des Hufe dienen. Er besitzt zwei Schenkel 2, 3, deren Enden 4, 5 im Strahlbereich des Hufes mit hinterschnittenen Aussparungen 7, in Form flächiger, seitlicher Auswölbungen 9, 10 versehen sind, wie auch aus der Detailansicht von Fig. 5 ersichtlich ist. In diese Aussparungen ist ein entsprechend geformtes Paßstück 6 eingesetzt, das in der Oberfläche 11 der Schenkelenden im wesentlichen vollständig integriert ist, um diese Oberfläche wie bei einem in sich geschlossenen Hufbeschlag zu schließen.

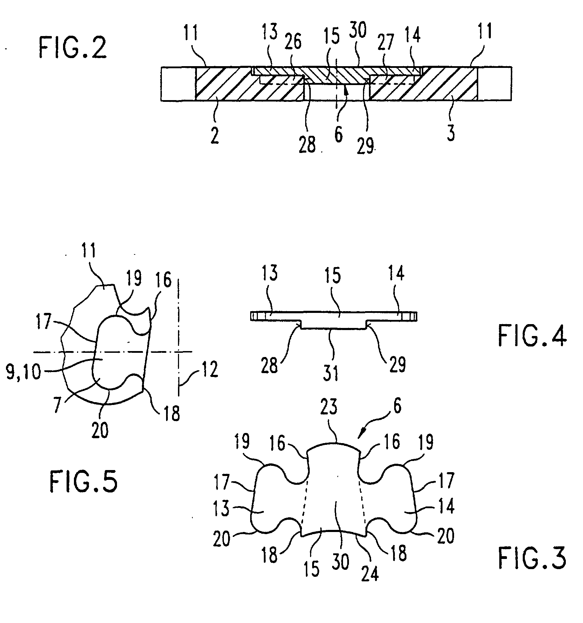

Das Paßstück 6 verbindet die beiden Schenkelenden 4, 5 formschlüssig und ist symmetrisch zur Längsachse 12 des Hufbeschlags 1 ausgebildet, wie aus den Figuren 3 und 4 ersichtlich. Es besitzt zwei in die Oberfläche der Schenkelenden integrierbare, flache seitliche Flügel 13, 14 und ein diese verbindendes, erhabenes Mittelstück 15, das, wie aus den Fig. 2 und 4 ersichtlich, in bezug auf die seitlichen Flügel 13, 14 eine der Hufoberfläche zugewandte Unterseite 31 aufweist sowie eine der Hufoberfläche abgewandte Oberseite 30, die mit den Flügeln 13,14 oder seitlichen Auswölbungen 9, 10 in einer Ebene liegt und im Einbauzustand, wie insbesondere aus Fig. 2 hervorgeht, mit der Oberfläche 11 der Schenkelenden 4, 5 bündig ist.

Zu diesem Zweck sind die den seitlichen Flügeln 13, 14 des symmetrisch zur Längsachse 12 des Hufbeschlags 1 und damit zu den Schenkeln 2, 3 ausgebildeten Paßstücks 6 hinsichtlich ihrer Konfiguration entsprechenden Aussparungen 7, in den Schenkelenden mit zur Längsachse 12 schräg verlaufenden Umrißteillinien 16, 17, 18 versehen, wie aus Fig. 5 ersichtlich. Je ein gerader Linienteil 16, 18 befindet sich am inneren Umriß 21 und am äußeren Umriß 22 jedes Schenkelendes 4, 5, und diese beiden Innen- und Außenteile 16, 18 sind entgegengesetzt zur Längsachse 12 des Hufbeschlags geneigt. Zwischen dem geraden Innenteil 16 und dem geraden

Außenteil 18 ist ein dritter gerade Umrißlinienteil 17 vorgesehen, der mit den beiden erstgenannten Teilen 16 und 18 durch zwei S-förmig gebogene Umrißlinienteile 19, 20 verbunden ist und ebenfalls zur Längsachse des Hufbeschlags geneigt ausgebildet ist. Die rechtwinklig zur Längsachse 12 des Hufbeschlags gemessene Breite jedes Flügels 13, 14 entspricht etwa der Breite des die beiden Flügel verbindenden Mittelstücks 15.

Wie aus Fig. 1 ersichtlich, werden der äußere Umriß 22 und der innere Umriß 21 der Schenkelenden 4, 5 durch die obere Umrißlinie 23 bzw. untere Umrißlinie 24 des Paßstücks 6 fortgesetzt, wobei die Schenkelenden 4, 5 in Richtung auf das kopfseitige Ende 32 des Hufbeschlags konvex bzw. konkav gekrümmt und symmetrisch zur Längsachse 12 ausgebildet sind.

Die Schenkelenden 4, 5 begrenzen somit eine Öffnung, deren Rand so geformt ist, daß er im Bereich der Schenkeloberfläche 11 dem äußeren Umriß des Paßstücks 6 entspricht und auf der der Oberfläche 11 abgewandten Unterseite des Paßstücks durch eine Kante begrenzt ist, die die Randkanten 28, 29 des erhabenen Mittelteils 15 des Paßstücks umschließen, wobei die das Paßstück aufnehmende Öffnung abgesetzte Lagerflächen 26, 27 zur Aufnahme der Flügel 13, 14 aufweist.

Auf diese Weise erhält das Paßstück zwischen den Schenkelenden 4, 5 einen Sitz, der nicht nur eine Höhenbegrenzung mit Hilfe der Lagerflächen 26, 27 innerhalb der Schenkelenden, sondern auch eine Seitenbegrenzung mit Hilfe des Randes der Aussparungen 7, 8 aufweist. Somit läßt sich das Paßstück nach seinem Einbau entweder mit den Schenkelenden verschweißen oder verschrauben oder anderweitig befestigen, wobei im Falle der Verschraubung die kleeblattförmigen Auswölbungen 9, 10, die auf den Lagerflächen 26, 27 aufliegen, miteinander verbunden werden.

Darüber hinaus ist die Möglichkeit gegeben, das Paßstück mit Rastelementen zu versehen, die beim Einbau in entsprechend ausgebildete Gegenelemente an den Schenkelelementen einrasten, um die gewünschte Konfiguration des Hufbeschlags sicherzustellen.

Der aus Kunststoff bestehende plattenförmige Hufbeschlag 100 in den Fig. 6 bis 9 weist zwei Schenkel 109, 110 auf, die im Bereich ihrer Enden durch einen Verbindungssteg in Form eines flächendeckenden separates Passstücks 111, das in die Schenkelenden eingesetzt wird und erforderlichenfalls wieder entfembar bzw. aus den Schenkelenden herausnehmbar ist, miteinander verbunden sind. Die Lauffläche 112 des Beschlags ist mit Profilkörpern in Gestalt von langlochförmigen Erhebungen 2 sowie Noppen 8 versehen. Diese Erhebungen sind

Ausbildungen von Vertiefungen 4, in die jeweils ein nicht dargestellter Hufnagel plazierbar ist, und werden von einem Rand 3 begrenzt, dessen Höhe im allgemeinen der Höhe des Hufnagelkopfes entspricht. Der Boden 105 der Vertiefung 104 weist eine Dicke auf, die, wie aus Fig. 9 ersichtlich, geringer ist als die Beschlagdicke.

In dem Boden 105 kann sich wenigsten ein Loch zur Aufnahme der Spitze bzw. des Schaftes des Hufnagels befinden. Dieses Loch ist in der Zeichnung nicht dargestellt. Die Länge der langlochförmigen Erhebung 102 bzw. der entsprechend gestalteten Vertiefung 104 entspricht wenigstens der doppelten Längenabmessung eines Hufnagels, so dass beim Beschlagen des Hufes der Hufbeschlag im Hinblick auf die Hufoberfläche seitlich justiert werden kann, um die weiße Linie H des Hufes, in die die Hufnägel einzuschlagen sind, mit den Vertiefungen 104 in Überdeckung zu bringen.

Der Rand 103 der langlochförmigen Erhebung 102 ist umlaufend, also nicht unterbrochen, und diese Erhebungen sind im vorderen Bereich des Beschlags so angeordnet, dass sie beim Beschlagen des Hufe auf der weißen Linie H zu liegen kommen, die in Fig. 6 nur in Form einer Strichreihe dargestellt ist, welche durch den Boden 105 jeder Vertiefung 104 hindurch sichtbar ist, weil hier als Kunsstoff für den Beschlag ein transparentes Material benutzt wird.

Wie aus Fig. 6 ersichtlich, sind die Erhebungen 102 im vorderen Bereich des Beschlags 100 beidseitig seiner Symmetrieachse F-F in gleichmäßigen Abständen angeordnet, und zwischen ihnen und neben ihnen ist die Lauffläche 106 des Hufbeschlags mit die Profilierung ergänzenden Noppen 107, 108 ausgestattet, die unterschiedlich aber auch gleich gestaltet sein können und voneinander beabstandet sind. Bei der in Fig. 7 gezeigten Schnittansicht sind zwei dieser Noppen 108 dargestellt, woraus erkennbar ist, dass die Noppen einen konischen Querschnitt aufweisen, sich also zur Laufflächenoberfläche hin verjüngen, so daß Verunreinigungen in der Lauffläche des Hufbeschlags leichter entfernbar sind.

## Patentansprüche

1. Hufeisenartiger, plattenförmiger Hufbeschlag aus Kunststoff, dessen beide Schenkel zur Anpassung an die Größe des Hufes mit einer Einrichtung zur Veränderung ihres gegenseitigen Abstandes in Form eines Verbindungssteges versehen sind, der mit den Schenkeln des Beschlages im Bereich ihrer Enden in Eingriff bringbar ist und ein Pass-Stück bildet, das die Umrissform der Enden zu deren gegenseitigen Verbindung ergänzt und selbst eine Umrissform aufweist, die in den Schenkelenden hinterschnittene Aussparungen ausfüllt, wobei das Pass-Stück in die äußere Oberfläche der Schenkelenden im wesentlichen vollständig integriert ist und flächendeckend mit seitlichen Flügeln in die hinterschnittenen Aussparungen eingreift, die Auswölbungen aufweisen und wobei die Flügel mit einem sie verbindenden Mittelstück versehen sind, das eine der Hufoberfläche abgewandte Oberseite aufweist, die mit der Oberfläche der seitlichen Auswölbungen in einer Ebene liegt und mit der Oberfläche der Schenkelenden bündig ist, **dadurch gekennzeichnet, dass** die der Hufoberfläche zugewandte Unterseite (31; 131) des Pass-Stücks (6; 111) zur Bildung eines erhabenen Teils des Mittelstücks (15; 115) gestuft ist, der Art, dass die beiden Flügel (13, 14; 113, 114 des Pass-Stücks (6; 111) durch eine Öffnung im Hufbeschlag (1; 100) begrenzende Randkanten (28, 29; 128, 129) gegen das Mittelstück abgesetzt sind und auf den Öffnungsrand umgebende, abgesetzte Lagerflächen (26, 27) in den Schenkelenden (4, 5) aufliegen, so dass die Schenkelenden durch das Pass-Stück unter Spannung miteinander in Verbindung haltbar sind, das Pass-Stück jedoch zwecks Austausches aus den Schenkelenden ausbaubar ist und dass der Hufbeschlag eine mit Profilkörpern versehene Lauffläche aufweist.

2. Hufbeschlag nach Anspruch 1, **dadurch gekennzeichnet, dass** das Pass-Stück (6; 111) die beiden Schenkelenden (4, 5) form- und kraftschlüssig verbindet.

3. Hufbeschlag nach Anspruch 1 oder 2, **dadurch gekennzeichnet, dass** das Pass-Stück (6; 111) symmetrisch zur Längsachse (12; FF) des Hufbeschlags (1; 100) und damit zu den Schenkeln (2, 3; 109, 110) ausgebildet ist.

4. Hufbeschlag nach einem der Ansprüche 1 - 3, **dadurch gekennzeichnet, dass** die seitlichen Flügel (13, 14; 113, 114) und die der Flügelform entsprechenden Aussparungen (7, 8) in den Schenkelenden (4, 5) zur Längsachse (12; FF) des Hufbeschlags (1; 100) schräg verlaufende Umrisslinien (16, 17, 18) aufweisen.

5. Hufbeschlag nach Anspruch 4, **dadurch gekennzeichnet, dass** die schräg verlaufenden Umrisslinien (16, 18) aus drei im wesentlichen geraden Teilen (16, 17, 18) bestehen, die durch zwei S-förmig gebogene Teile (19, 20) verbunden sind.

6. Hufbeschlag nach -Anspruch 5, **dadurch gekennzeichnet, dass** je ein gerades Teil (16, 17, 18) sich am inneren Umriss (21) und am äußeren Umriss (22) jedes Schenkelendes (4, 5) befindet, und dass diese beiden geraden Innen- und Außenteile (16, 18) entgegengesetzt zur Längsachse (12) des Hufbeschlags (1) geneigt ausgebildet sind.

7. Hufbeschlag nach Anspruch 5 oder 6, **dadurch gekennzeichnet, dass** der zwischen dem geraden Innenteil (16) und dem geraden Außenteil (18) befindliche dritte gerade Teil (17) des Umrisses, der m it diesen über die beiden S-förmigen gebogenen Teile (19, 20) verbunden ist, entsprechend dem geraden Außenteil (18) zur Längsachse (12) des Hufbeschlags geneigt ist.

8. Hufbeschlag nach einem der Ansprüche 4 - 7, **dadurch gekennzeichnet, dass** die rechtwinklig zur Längsachse (12) des Hufbeschlags (1) gemessene Breite jedes Flügels (13, 14) etwa der Breite des die beiden Flügel verbindenden Mittelstücks (15) entspricht.

9. Hufbeschlag nach einem der Ansprüche 1 - 8, **dadurch gekennzeichnet, dass** das Pass-Stück (6; 111) mit Rastelementen versehen ist, die beim Einbau in entsprechend ausgebildete Gegenelemente an den Schenkelenden (4, 5) einrastbar sind.

10. Hufbeschlag nach einem der Ansprüche 1 - 9, **dadurch gekennzeichnet, dass** die Schenkelenden (4, 5) in Richtung auf das kopfseitige Ende (32) des Hufbeschlags (1) konkav bzw. konvex gekrümmt sind.

11. Hufbeschlag nach einem der Ansprüche 1 - 10, **dadurch gekennzeichnet, dass** der äußere Umriss (29) und innere Umriss (21) der Schenkelenden (4, 5) durch die obere Umrisslinie (23) bzw. untere Umrisslinie (24) des Pass-Stücks (6) fortgesetzt werden.

12. Hufbeschlag nach Anspruch 11, **dadurch gekennzeichnet, dass** die obere Umrisslinie (23) konvex und die untere Umrisslinie (24) konkav gekrümmt und zur Längsachse (12) des Hufbeschlags (1) symmetrisch ausgebildet sind.

13. Hufbeschlag nach einem der Ansprüche 1 - 12, **dadurch gekennzeichnet, dass** das Pass-Stück (6) in die für dieses vorgesehenen Aussparungen (7, 8) der Schenkel (2, 3) einschweißbar ist.

14. Hufbeschlag nach einem der Ansprüche 1 - 13, **dadurch gekennzeichnet, dass** das Pass-Stück (6) mit den Schenkeln (2, 3) verschraubbar ist.

15. Hufbeschlag nach einem der Ansprüche 1 - 14, **dadurch gekennzeichnet, dass** das Pass-Stück seiner äußeren Form nach kleeblattähnlich ausgebildet ist.

16. Hufbeschlag nach Anspruch 1, **dadurch gekennzeichnet, dass** wenigstens einige der Profilkörper die Gestalt langlochförmiger Erhebungen (102) aufweisen, welche zur Bildung einer Vertiefung (104), in die jeweils ein Hufnagel platzierbar ist, von einem Rand (103) begrenzt sind.

17. Hufbeschlag nach Anspruch 16, **dadurch gekennzeichnet, dass** der Boden (105) der Vertiefung (104) eine Dicke aufweist, die geringer ist als die Hufbeschlagdicke.

18. Hufbeschlag nach Anspruch 16 oder 17, **dadurch gekennzeichnet, dass** sich im Boden (105) der Vertiefung (104) wenigstens ein Loch zur Aufnahme der Spitze bzw. des Schaftes des Hufnagels befindet.

19. Hufbeschlag nach einem der Ansprüche 16 - 18, **dadurch gekennzeichnet, dass** die Höhe des Randes (103) der Höhe eines Hufnagelkopfes entspricht.

20. Hufbeschlag nach einem der Ansprüche 16 - 19, **dadurch gekennzeichnet, dass** die Länge der langlochförmigen Erhebung (102 wenigstens der doppelten Längenabmessung eines Hufnagelkopfes entspricht.

21. Hufbeschlag nach einem der Ansprüche 16 - 20, **dadurch gekennzeichnet, dass** der Rand (103) umlaufend ist.

22. Hufbeschlag nach einem der Ansprüche 16 - 21, **dadurch gekennzeichnet, dass** die langlochförmigen Erhebungen (102) im vorderen Bereich des Hufbeschlags (1, 100) so angeordnet sind, dass sie beim Beschlagen des Hufs auf der sogenannten weißen Linie liegen, in die die Hufnägel einzuschlagen sind.

23. Hufbeschlag nach einem der Ansprüche 16 - 22, **dadurch gekennzeichnet, dass** die langlochförmigen Erhebungen (102) im vorderen Bereich des Hufbeschlags (1,100) beidseitig seiner Symmetrieachse (F-F) in gleichmäßigen Abständen angeordnet sind.

24. Hufbeschlag nach einem der Ansprüche 16 - 23, **dadurch gekennzeichnet, dass** die Lauffläche des Hufbeschlags (100) zwischen und neben den langlochförmigen Erhebungen (102) eine Profilierung aus Noppen (107, 108) aufweist.

25. Hufbeschlag nach Anspruch 24, **dadurch gekennzeichnet, dass** die Noppen (107, 108) voneinander beabstandet und kegelstumpfförmig ausgebildet sind.

## Claims

1. Horseshoe-like, plate configured hoofpad of plastic material having two legs, which can be adapted to the size of the hoof by means of the changing their distance with respect to one another, having the form of a connecting bar which can be engaged with the legs of the pad in the area of their ends and forming a snug fit completing the circumference of the ends for the interacting connection purposes and forming itself a circumference completing the recesses within the ends of the legs integrating essentially completely the snug fit piece within the outer surface of the ends of the legs and engaging with lateral wings these recesses provided with pulbs and wherein the wings are provided with a connecting center part having a lower side opposite to the outer surface of the hoof as well as with an upper side in the same level of the upper surface of the hoof which upper side is disposed in the same level as the wings, **characterized in that** the lower side (31; 131) of the snug fit piece (6; 111) adjacent to the surface of the hoof is stepped to form the elevated center part (15; 115) resulting therein that the two wings (13, 14; 113, 114) ofthe snug fit piece (6; 111) are defined by edges (28, 29; 128, 129) forming an opening in the pad (1; 100) within the center part and are supported by support faces (26, 27) within the ends (4, 5) of the legs surrounded by the edge of the opening so that the ends of the legs are maintained connected under tension by the snug fit piece, which, however, is for the purpose of extension removable of the ends of the legs, and further **characterized in that** the hoof pad is provided with a bearing surface having profile bodies.

2. Hoof pad according to claim 1, **characterized in that** the snug fit piece (6; 111) connects the two ends (4, 5) of the legs by precisely fitted therein in configurational and force transmitting aspects.

3. Hoof pad according to claim 1 or 2, **characterized in that** the snug fit piece (6; 111) is configured symmetrically to the longitudinal axis (12; FF) of the hoof pad (1; 100) and thus to the legs (2, 3; 109, 110).

4. Hoof pad according to one of the claims 1 - 3, **characterized in that** the lateral wings (13, 14; 113, 114) as well as the recesses (7, 8) corresponding to the configuration of the wings within the ends of the legs (4, 5) are provided with circumferential lines (16, 17, 18) inclined to the longitudinal axis (12; FF) of the hoof pad (1; 100).

5. Hoof pad according to claim 4, **characterized in that** the inclined circumferential lines (16, 18) comprise three essentially straight parts (16, 17, 18) joined by two S-configured parts (19, 20).

6. Hoof pad according to claim 5, **characterized in that** each one of these straight parts (16, 17, 18) is positioned at the inner circumference (21) and at the outer circumference (22) of each end (4, 5) of the legs and that these two straight inner and outer parts (16, 18) are arranged oppositely inclined to the longitudinal axis (12) of the hoof pad (1).

7. Hoof pad according to claim 5 or 6, **characterized in that** there is a third straight part (17) positioned between the straight inner part (16) and the straight outer part (18) of the circumference, which is joined by the two S-configured curved parts (19, 20) and is inclined to the longitudinal axis (12) of the hoof pad corresponding to the straight outer part (18).

8. Hoof pad according to one of the claims 4 - 7, **characterized in that** the width of each wing (13, 14) measured perpendicularly to the longitudinal axis (12) of the hoof pad (1) corresponds essentially to the width of the center part (15) connecting the two wings.

9. Hoof pad according to one of the claims 1 - 8, **characterized in that** the snug fit piece (6; 111) is provided with plate-like elements insertable during the mounting into the correspondigly configured counter elements at the ends (4, 5) of the legs.

10. Hoof pad accoriding to one of the claims 1 - 9, **characterized in that** the leg ends (4, 5) are concavely or, respectively, convexly curved in the direction of the front end (32) of the hoof pad (1).

11. Hoof pad according to one of the claims 1 - 10, **characterized in that** the outer circumference (29) and the inner circumference (21) of the leg ends (4, 5) are continued by the upper circumferential line (23) or, respectively, the lower circumferential line (24) of the snug fit piece (6).

12. Hoof pad according to claim 11, **characterized in that** the upper circumferential line (23) is convexly curved and the lower circumferential line (24) is concavely curved and are symmetrically configured with respect to the longitudinal axis (12) of the hoof pad (1).

13. Hoof pad according to one of the claims 1 - 12, **characterized in that** the snug fit piece (6) can be fixed in the excess (7, 8) of the legs (2, 3) by welding.

14. Hoof pad according to one of the claims 1 - 12, **characterized in that** the snug fit piece (6) can be screwed into the legs (2, 3).

15. Hoof pad according to one of the claims 1 - 14, **characterized in that** the snug fit piece is provided with an outer configuration similar to a clover-leaf.

16. Hoof pad according to claim 1, **characterized in that** at least some of the profile bodies are provided with slot-like elevations (102) defined by an edge (103) to form an impression (104) in each of which a nail can be placed.

17. Hoof pad according to claim 16, **characterized in that** the bottom (105) of the impression (104) has a thickness less than the thickness of the pad.

18. Hoof pad according to claim 16 or 17, **characterized in that** within the bottom (105) of the impression (104) at least one hole for the reception of the tip or, respectively, the shaft of the nail is provided.

19. Hoof pad according to one of the claims 16 - 18, **characterized in that** the height of the edge (103) corresponds to the height of the head of the nail.

20. Hoof pad according to one of the claims 16 - 19, **characterized in that** the length of the slot-like elevation (102) corresponds essentially twice the length of the head of the nail.

21. Hoof pad according to one of the claims 16 - 20, **characterized in that** the edge (103) is continuously configured.

22. Hoof pad according to one of the claims 16 - 21, **characterized in that** the slot-like elevations (102) are arranged in the front area of the pad (1, 100) such that during the mounting of the pad on the hoof these elevations are positioned on the so-called white line, into which the nails are hammered.

23. Hoof pad according to one of the claims 16 - 22, **characterized in that** the slot-like elevations (102) in the front area of the pad (1, 100) are arranged at both sides of the symmetry axes (FF) in the same distances therefrom.

24. Hoof pad according to one of the claims 16 - 23, **characterized in that** the running or bottom surface of the hoof pad (100) is provided with profile bodies between and adjacent to the slot-like elevations (102) forming naps (107, 108).

25. Hoof pad according to claim 24, **characterized in that** the naps (107, 108) are arranged distantly with respect to one another and are configured conically.

## Revendications

1. Ferrure de sabot en forme de plaque et en matière plastique, de type fer à cheval, dont les deux branches sont pourvues, pour s'adapter à la taille du sabot, d'un dispositif destiné à faire varier leur écartement, sous la forme d'une entretoise de liaison qui peut être amenée en prise avec les branches de la ferrure, dans la zone de leurs extrémités, et qui forme une pièce d'adaptation qui complète la forme du contour des extrémités pour leur liaison réciproque, et qui présente elle-même une forme de contour qui remplit des découpes détalonnées dans les extrémités des branches, dans laquelle la pièce d'adaptation est sensiblement entièrement intégrée dans la surface extérieure des extrémités des branches et pénètre, de manière à recouvrir la surface, par des ailettes latérales dans les découpes détalonnées qui présentent des parties bombées, et dans laquelle les ailettes sont pourvues d'une pièce centrale qui les relie et qui présente une face supérieure tournée à l'opposé de la surface du sabot, laquelle face supérieure se situe dans un même plan que la surface des parties bombées latérales et est à fleur de la surface des extrémités des branches, **caractérisée en ce que** la face inférieure (31 ; 131) tournée vers la surface du sabot, de la pièce d'adaptation (6 ; 111), est étagée pour former une partie en relief de la pièce centrale (15 ; 115), de sorte que les deux ailettes (13, 14; 113, 114) de la pièce d'adaptation (6; 111) sont décalées par rapport à la pièce centrale, par des arêtes de bordure (28, 29 ; 128, 129) délimitant une ouverture dans la ferrure de sabot (1; 100), et reposent sur des surfaces de support (26, 27) décalées, dans les extrémités (4, 5) des branches, entourant le bord de l'ouverture, de sorte que les extrémités des branches peuvent être maintenues en liaison entre elles par la pièce d'adaptation sous contrainte, mais la pièce d'adaptation peut être démontée des extrémités des branches pour son échange, et **en ce que** la ferrure de sabot présente une surface d'usure pourvue de corps profilés.

2. Ferrure de sabot selon la revendication 1, **caractérisée en ce que** la pièce d'adaptation (6 ; 111) relie par complémentarité de formes et en force les deux extrémités (4, 5) des branches.

3. Ferrure de sabot selon la revendication 1 ou 2, **caractérisée en ce que** la pièce d'adaptation (6; 111) est réalisée symétrique par rapport à l'axe longitudinal (12 ; FF) de la ferrure de sabot (1 ; 100) et donc par rapport aux branches (2, 3 ; 109, 110).

4. Ferrure de sabot selon l'une des revendications 1 à 3, **caractérisée en ce que** les ailettes latérales (13, 14; 113, 114) et les découpes (7, 8) correspondant à la forme des ailettes, dans les extrémités (4, 5) des branches, présentent des lignes de contour (16, 17, 18) s'étendant obliquement par rapport à l'axe longitudinal (12 ; FF) de la ferrure de sabot (1 ; 100).

5. Ferrure de sabot selon la revendication 4, **caractérisée en ce que** les lignes de contour (16, 18) s'étendant obliquement sont constituées de trois parties (16, 17, 18) sensiblement droites qui sont reliées par deux parties (19, 20) courbées en S.

6. Ferrure de sabot selon la revendication 5, **caractérisée en ce qu'**une partie droite (16, 17, 18) se trouve sur le contour intérieur (21) et le contour extérieur (22) de chaque extrémité de branche (4, 5), et **en ce que** ces deux parties intérieures et extérieures droites (16, 18) sont inclinées en sens opposés par rapport à l'axe longitudinal (12) de la ferrure de sabot (1).

7. Ferrure de sabot selon la revendication 5 ou 6, **caractérisée en ce que** la troisième partie droite (17), se trouvant entre la partie intérieure droite (16) et la partie extérieure droite (18), du contour, qui est reliée à celles-ci par les parties (19, 20) courbées en S, est inclinée par rapport à l'axe longitudinal (12) de la ferrure de sabot conformément à la partie extérieure droite (18).

8. Ferrure de sabot selon l'une des revendications 4 à 7, **caractérisée en ce que** la largeur de chaque ailette (13, 14), mesurée à angle droit par rapport à l'axe longitudinal (12) de la ferrure de sabot (1), correspond approximativement à la largeur de la pièce centrale (15) qui relie les deux ailettes.

9. Ferrure de sabot selon l'une des revendications 1 à 8, **caractérisée en ce que** la pièce d'adaptation (6 ; 111) est pourvue d'éléments d'encliquetage qui, au montage, peuvent s'encliqueter dans des contre-éléments correspondants aux extrémités (4, 5) des branches.

10. Ferrure de sabot selon l'une des revendications 1 à 9, **caractérisée en ce que** les extrémités (4, 5) des branches sont concaves ou convexes en direction de l'extrémité (32) côté tête de la ferrure de sabot (1).

11. Ferrure de sabot selon l'une des revendications 1 à 10, **caractérisée en ce que** le contour extérieur (29) et le contour intérieur (21) des extrémités (4, 5) des branches sont prolongés respectivement par la ligne de contour supérieure (23) et la ligne de contour inférieure (4) de la pièce d'adaptation (6).

12. Ferrure de sabot selon la revendication 11, **caractérisée en ce que** la ligne de contour supérieure (23) est convexe et la ligne de contour inférieure (24) est concave et toutes deux sont réalisées symétriques par rapport à l'axe longitudinal (12) de la ferrure de sabot (1).

13. Ferrure de sabot selon l'une des revendications 1 à 12, **caractérisée en ce que** la pièce d'adaptation (6) peut être soudée dans les découpes (7, 8) prévues pour celle-ci des branches (2, 3).

14. Ferrure de sabot selon l'une des revendications 1 à 13, **caractérisée en ce que** la pièce d'adaptation (6) peut être vissée sur les branches (2, 3).

15. Ferrure de sabot selon l'une des revendications 1 à 14, **caractérisée en ce que** la forme extérieure de la pièce d'adaptation est du genre feuille de trèfle.

16. Ferrure de sabot selon la revendication 1, **caractérisée en ce qu'**au moins quelques-uns des corps profilés présentent la forme de reliefs (102) en forme de trous oblongs qui sont délimités par un bord (103), pour former un évidement (104) dans lequel peut être placé un clou à ferrer.

17. Ferrure de sabot selon la revendication 16, **caractérisée en ce que** le fond (105) de l'évidement (104) présente une épaisseur qui est inférieure à l'épaisseur de la ferrure de sabot.

18. Ferrure de sabot selon la revendication 16 ou 17, **caractérisée en ce que** dans le fond (105) de l'évidement (104) se trouve au moins un trou destiné à recevoir la pointe ou la tige du clou à ferrer.

19. Ferrure de sabot selon l'une des revendications 16 à 18, **caractérisée en ce que** la hauteur du bord (103) correspond à la hauteur d'une tête d'un clou à ferrer.

20. Ferrure de sabot selon l'une des revendications 6 à 19, **caractérisée en ce que** la longueur du relief (102) en forme de trou oblong correspond au moins au double de la longueur d'une tête d'un clou à ferrer.

21. Ferrure de sabot selon l'une des revendications 16 à 20, **caractérisée en ce que** le bord (103) est périphérique.

22. Ferrure de sabot selon l'une des revendications 16 à 21, **caractérisée en ce que** les reliefs (102) en forme de trous oblongs sont disposés dans la zone avant de la ferrure de sabot (1, 100), de manière que lorsque l'on ferre le sabot, ils se trouvent sur la ligne dite blanche dans laquelle on doit enfoncer les clous à ferrer.

23. Ferrure de sabot selon l'une des revendications 16 à 22, **caractérisée en ce que** les reliefs (102) en forme de trous oblongs sont disposés dans la zone avant de la ferrure de sabot (1, 100) des deux côtés de son axe de symétrie (F-F) à distances régulières.

24. Ferrure de sabot selon l'une des revendications 16 à 23, **caractérisée en ce que** la surface d'usure de la ferrure de sabot (100) présente un profilage fait de boutons (107, 108) situés entre et à côté des reliefs (102) en forme de trous oblongs.

25. Ferrure de sabot selon la revendication 24, **caractérisée en ce que** les boutons (107, 108) sont espacés les uns des autres et ont une forme tronconique.
